# EUROPÄISCHE PATENTSCHRIFT

(11) **EP 0 352 590 B1**
(45) Veröffentlichungstag und Bekanntmachung des Hinweises auf die Patenterteilung: **28.04.1993**
(21) Anmeldenummer: 89113078.3
(22) Anmeldetag: 17.07.1989
(51) Int. Cl.: H01S 3/097

(54) **Mittels gepulster Mikrowelle angeregter Gaslaser**
Gas-laser excited by pulsed microwaves
Laser à gaz excité au moyen de micro-ondes impulsionnelles

(30) Priorität: 29.07.1988 DE 3825971
(43) Veröffentlichungstag der Anmeldung: 31.01.1990
(73) Patentinhaber: SIEMENS AKTIENGESELLSCHAFT, 80333 München (DE)
(72) Erfinder: Renz, Wolfgang, Dipl.-Ing., W-8046 Garching (DE)
(74) Vertreter: Fuchs, Franz-Josef, Dr.-Ing.

(56) Entgegenhaltungen:
- EP-A- 0 284 719
- JOURNAL OF APPLIED PHYSICS, Band 49, Nr. 7, Juli 1978, Seiten 3753-3756, American Institute of Physics; K.G. HANDY et al.: "Laser generation by pulsed 2.45-GHz microwave excitation of CO2"

## Beschreibung

Die Erfindung betrifft einen mittels gepulster Mikrowelle angeregten Gaslaser gemäß dem Oberbegriff des Patentanspruchs 1.

Ein derartiger Gaslaser ist aus K.G. Handy, J.E. Brandelik: Laser Generation by Pulsed 2.45-GHz Microwave Excitation of CO₂, Journal Applied Physics, Vol 49 (1978), S.3753-3756 bekannt. Gemäß dieser Literaturstelle wird eine stehende Mikrowellenentladung in einem Hohlleiter erzeugt, wobei ein Glasrohr als Entladungskanal für die Laserentladung den Hohlleiter in Querrichtung durchdringt, während in seienr Längsrichtung profilierte Stege aus elektrisch leitfähigem Material zu Beeinflussung der Feldverteilung angeordnet sind. Eine derartige Anregung eines Gaslasers ergibt nur relativ geringe Intensitätswerte, da die zur Anregung des Lasers erforderliche Glimmentladung nur in einem relativ kurzen Bereich des Hohlleiters erzeugt werden kann. Die erreichbare Entladungszone ist kürzer als eine Halbwelle der anregenden Mikrowelle im Hohlleiter. Dies ist auch der Grund dafür, daß beim Stand der Technik der Entladungskanal quer zur Ausdehnung des Hohlleiters angeordnet ist und daß über die besondere Formgebung der dort beschreibenen Stege versucht wird, die Entladung im Bereich des Hohlleiters zu halten. Diese Ausführungsform kann aufgrund der Abmessungen, die ein derartiger Hohlleiter einhalten muß, nur eine sehr kurze Anregungszone für den Laser realisieren. Die so erreichbare Laserenergie ist daher sehr gering.

Die Aufgabe, die der vorliegenden Erfindung zugrunde liegt, besteht bei einem Gaslaser der eingangs beschriebenen Art in einer Steigerung der Laserleistung bei gleichen Abmessungen des Hohlleiters. Diese Aufgabe wird durch die kennzeichnenden Merkmale des Patentanspruchs 1 gelöst.

Durch die Anordnung gemäß dem Patentanspruch 1 wird im Entladungsrohr auf der Seite des Kurzschlußgliedes eine Glimmentladung gezündet und wandert dann nach einer Erkenntnis, die der Erfindung zugrundeliegt, durch das Entladungsrohr hindurch und bleibt schließlich in der Nähe der Mikrowelleneinspeisung stehen, bis die Intensität der Mikrowelle unter einen Schwellwert für die Gasentladung abgesunken ist.

Aufgrund der Dimensionierung und der Gasauswahl gemäß dem Patentanspruch 1 bleibt der angeregte Zustand des Lasergases auch nach dem Abwandern der Gasentladungszone erhalten, die Laserentladung zündet durch Selbstanregung, sobald die erforderliche Länge im Entladungsrohr mit angeregtem Gas erfüllt ist, und erlischt erst nach dem Erlöschen der Mikrowellenentladung.

Eine vorteilhafte Ausführungsform des Hohlleiters ist dadurch gegeben, daß an den gerade verlaufenden Teil beidseitig Endstücke angrenzen, daß die Endstücke mit dem geraden Teil winkelig zusammenstoßen, daß der Hohlleiter ein Rechteckprofil aufweist und daß das Entladungsrohr durch eine Wand jedes Endstükkes hindurchgeführt ist. Dadurch ist eine Mikrowelleneinspeisung in an sich bekannter Art und die Anbringung eines Kurzschlußschiebers auf der jeweiligen Stirnseite einfach möglich. In dieser Ausführung bildet sich die Gasentladung im gesamten innerhalb des Hohlleiters liegenden Bereich des Entladungsrohres aus. Im Hohlleiter selbst, außerhalb des Entladungsrohres, sind die für das Auftreten einer Glimmentladung notwendigen Bedingungen nicht erfüllt. Die Zündhilfe wird dabei vorteilhaft im geradlinigen Teil in der Nähe des Überganges zum Endstück angeordnet. Die Zündhilfe besteht vorteilhaft aus einer Schraube oder Spitze, welche in den Hohlleiter hineinragt.

Das Entladungsrohr ist außerhalb der Endstücke jeweils mit einem Metallrohr über ein Teil seiner Länge umgeben, wobei dieses Metallrohr mit dem Hohlleiter HF-dicht verbunden ist. Dadurch wird eine Abschirmung der Mikrowelle erreicht.

Vorteilhaft ist das Entladungsrohr auf einer der Symmetrieachse des Hohlleiters zugewandten Fläche des Steges befestigt. Der Laser ist vorteilhaft ein CO₂-Laser, da das CO₂-Gas die entsprechend hohe Lebensdauer seines angeregten Zustandes aufweist. Ein CO₂ -Laser ist ein Laser it CO₂ und den üblichen Zusätzen von weiteren Gasen, insbesondere Stickstoff und Helium.

Vorteilhaft ist der Hohlleiter als Grundmode-Hohlleiter ausgebildet, besitzt einen rechteckförmigen Querschnitt und einen Abstand zwischen dem Anschlußteil und dem Kurzschlußteil, welcher größer gleich λ_{H} ist. λ_{H} ist die Wellenlänge der Mikrowelle im Hohlleiter.

Eine besonders hohe Energieausnutzung und ein quasikontinuierlicher Betrieb ist in einer Ausführungsform ermöglicht, in der ein Lasergas mit großer Lebensdauer seines angeregten Zustandes, z.B. CO oder CO₂, vorgesehen ist, in der die Impulsbreite und die Impulsamplitude der Mikrowelle so gewählt sind, daß die Laufzeit der Mikrowellen-Gasentladung durch den Hohlleiter kleiner ist als die Lebensdauer des angeregten Zustandes des Lasergases. In dieser Ausführungsform wird einerseits die gesamte Länge des Hohlleiters zur Anregung des Lasergases ausgenützt und andererseits nach dem Durchwandern der Glimmentladung durch den Hohlleiter die Glimmentladung sofort gelöscht, so daß ein neues Zünden durch einen neuen Impuls sehr schnell möglich ist. Dabei läuft die Laserentladung noch nach dem Erlöschen der Glimmentladung weiter, ein Zünden des neuen Impulses noch vor dem Erlöschen der Laserentladung ist möglich, so daß ein quasikontinuierlicher Laserbetrieb erreicht ist.

Die Erfindung wird nun anhand von sieben Figuren näher erläutert.
- FIG 1: zeigt einen erfindungsgemäßen Gaslaser schematisch in teilweise gebrochener Anischt,
- FIG 2: zeigt einen Schnitt durch den Gaslaser gemäß FIG 1, die
- FIG 3: bis 6 zeigen die Funktionsweise eines Gaslasers gemäß den Figuren 1 und 2 anhand von Diagrammen,
- FIG 7: zeigt eine weitere Ausführungsform für den Querschnitt eines erfindungsgemäßen Gaslasers.

Ein Hohlleiter 1 enthält einen im wesentlichen gerade verlaufenden Teil 2 und zwei im Winkel hierzu verlaufende Endstücke 3 und 4, die Stirnseiten 11 bzw. 12 aufweisen. Eine erste Stirnseite 11 wird durch einen kurzschlußschieber 6 gebildet. An einer zweiten Stirnseite 12 ist ein Anschlußteil 5 für Mikrowelleneinspeisung angebracht, das mit einem Mikrowellengenerator 13 verschaltet ist.

Ein Entladungsrohr 7 durchdringt den Hohlleiter 1 in der Längsrichtung seines geraden Teiles 2 und tritt durch je eine Wand 16 bzw. 17 der abgewinkelten Endstücke 3, 4 aus dem Hohlleiter 1 heraus. Angrenzend an die Wand 16 bzw. 17 der Endstücke 4 bzw. 3 sind elektrisch leitende Rohrstücke 15 das Entladungsrohr 7 umhüllend angeordnet und mit dem Hohlleiter 1 hochfrequenzdicht verbunden. Sie dienen zur Abschirmung der Mikrowelle gegenüber der Umgebung. Das Entladungsrohr 7 ist beidseitig durch Brewsterfenster 8 abgeschlossen. Resonatorspiegel 9, die koaxial zum Entladungsrohr 7 angeordnet sind, vervollständigen den Laserresonator. Gasanschlüsse 10 und 14 ermöglichen die ständige Zufuhr von frischem Lasergas, wobei vorzugsweise die Zufuhr über den Anschluß 10 auf der Seite der Mikrowelleneinspeisung erfolgt. Dadurch ergibt sich ein besonders guter Wirkungsgrad des Lasers. Als Lasergas eignet sich eine Mischung He:N₂:CO₂ = 75:15:10.

Im geraden Teil 2 des Hohlleiters ist auf der Seite des Kurzschlußgliedes 6 eine Zündhilfe 21 angeordnet. Die Zündhilfe 21 besteht vorzugsweise aus einer Nadel oder Schraube, welche in den Hohlleiter hineinragt. Sie kann auch aus beliebigen Kanten oder Spitzen bestehen, sofern sie ein Feldstärkeerhöhung in diesem Bereich bewirken, die stärker ist als die Feldstärkeerhöhung an beliebigen anderen Stellen des Hohlleiters, beispielsweise am Knick 25 beim Anschluß des Endstückes 4. Das Kurzschlußglied 6 ist so justiert, daß die Zündhilfe 21 im Bereich eines Spannungsbauches der im Hohlleiter erzeugten Mikrowelle liegt. Die Zündhilfe 21 gewährleistet, daß die Glimmentladung beim Anlegen der Hochfrequenz stets in dem ihr zunächst liegenden Bereich zündet. Die Glimmentladung erfolgt zunächst in einem Raum, der kleiner ist als die halbe Wellenlänge der im Hohlleiter anliegenden Mikrowelle. Nach dem Zünden der Glimmentladung wird der Mikrowelle Energie entnommen und das Zündverhalten so verändert, daß sich schon nach einem geringen Anstieg der momentanen Feldstärke die Entladung von er Zündhilfe löst und zum Anfang des Hohlleiters, d.h. zum Anschlußteil 5 für die Mikrowelleneinspeisung hin bewegt. Bei entsprechender Gasauswahl bleiben die wegen dieser Bewegung nicht mehr von der Gasentladung erfaßten Glasvolumina in angeregtem Zustand. Die angeregte Gassäule wächst, mit ihr die Verstärkung für stimulierte Emission und nach Überschreiten einer gewissen Mindestlänge tritt spontane Laseremission ein. Diese spontane Laseremission zehrt eine relativ lange Zeit von dem angeregten Gas, so daß beim Durchlauf der Glimmentladung durch den Hohlleiter die Laserintensität stetig wächst, bis die Gasentladung am Anfang des Hohlleiters angekommem ist oder, je nach Dimensionierung, eine Sättigung erreicht ist.

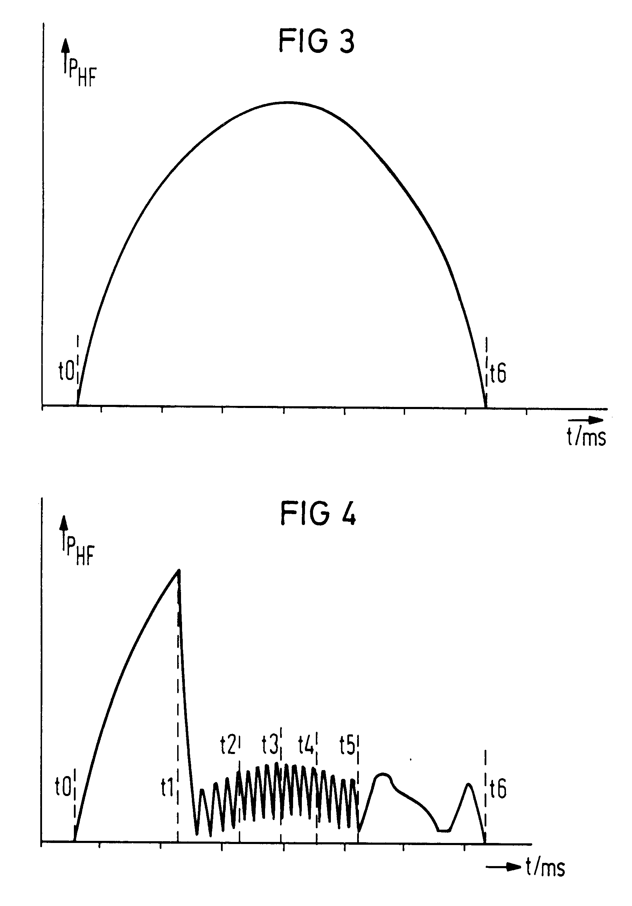

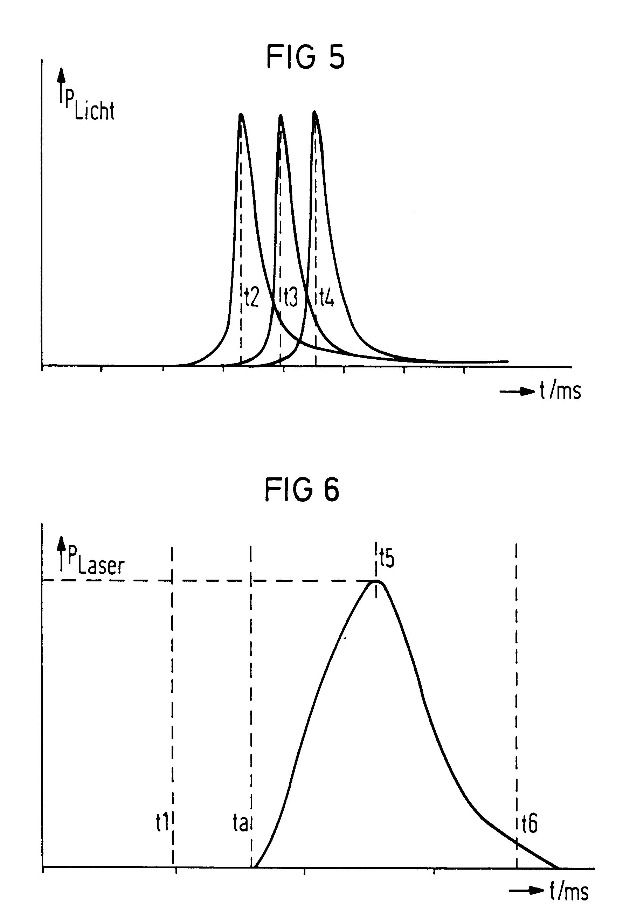

FIG 3 zeigt des zeitlichen Verlauf eines vorlaufenden Mikrowellenleistungsimpulses am Anfang des Hohlleiters bei gepulster Anregung. FIG 4 zeigt einen rücklaufenden Leistungsimpuls derselben gepulsten Anregung. Man erkennt sofort, daß ein erheblicher Teil der Anregungsleistung in der Glimmentladung absorbiert worden ist. Deren Intensität P_{Licht} wurde an verschiedenen Stellen des insgesamt 1m-langen Hohlleiters gemessen. In FIG 5 wurden für drei Meßpunkte die Kurven der Lichtintensität über der Zeit wiedergegeben. Diese Meßpunkte lagen in 25cm, 50cm, 75cm Abstand vom Ende, d.h. von der Stirnseite 11 des Holleiters 1. Dabei wird der Meßpunkt 1 zur Zeit t2, der Meßpunkt 2 zur Zeit t3 und der Meßpunkt 3 zur Zeit t4 erreicht. Man sieht aus diesen Diagramme klar, daß sich die Glimmentladung vom Ende des Hohlleiters zu seinem Anfang, d.h. zur Stirnseite 12 hin bewegt und jeweils nur einen kleinen Teil des Hohlleiters erfaßt. Die Intensität der Glimmentladung bleibt dabei annähernd konstant.

Nach der Anregung eines für die spontane Laseremission ausreichenden Teiles des Gases im Entladungsrohr setzt zur Zeit tₐ die Laserentladung ein. Ihre Intensität P_{Laser} steigt stetig an, bis die Entladung bei t5 den Anfang des Hohlleiters erreicht. Dann fällt die Laserentladung ab, dauert aber auch nach dem Verschwinden des anregenden Mikrowellenimpulses an. Dies ist deutlich aus FIG 6 ersichtlich, in der die Kurve der Laserleistung den Wert t6 auf der Zeitachse, d.h. das Ende des Anregungsimpulses, mit einer beträchtlichen Restintensivität überschreitet.

Sobald die anliegende Mikrowellenleistung einen Schwellwert unterschreitet, erlischt die Glimmentladung. Nach dem Erlöschen der Glimmentladung kann sie im Bereich der Zündeinrichtung 21 neu gezündet werden, der beschriebene Vorgang beginnt aufs Neue. Wird ein Lasergas mit großer Lebensdauer seines angeregten Zustandes (z.B. CO, CO₂) verwendet und werden die Impulsbreite (t6-t0) und die Impulsamplitude der Mikrowellenleistung (P_{HF}) so gewählt, daß die Laufzeit der Glimmentladung durch den Hohlleiter kleiner ist als die Lebensdauer des angeregten Zustandes des Lasergases, dann wird die gesamte Länge des Hohlleiters ausgenützt.

Ein quasikontinuierlicher Betrieb des Lasers ist ermöglicht, indem zumindest annähernd rechteckförmige Mikrowellenimpulse eingesetzt werden, indem deren Impulsbreite (t6-t0) kleiner oder gleich der Laufzeit der Glimmentladung durch den Hohlleiter gewählt ist und indem die Impulsfolgefrquenz so hoch gewählt ist, daß im Zeitintervall zwischen den Impulsen, d.h. zwischen t6 des ersten und t0 des zweiten Impulses, gerade noch ein Erlöschen der Gasentladung gesichert ist. Bei relativ flach ansteigenden Impulsen kann diese Bedingung auch durch sich geringfügig überlappende Impulse erfüllt sein.

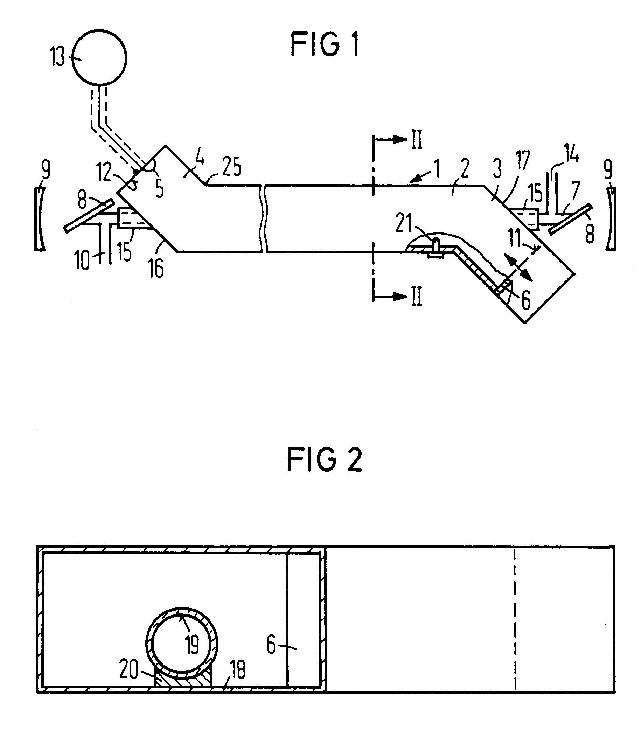

Ein Hohlleiter mit einem Querschnitt gemäß FIG 2 kann vorteilhaft als Normalhohlleiter R26 ausgebildet sein, das heißt, die Maße des Querschnitts im Inneren des Hohlleiters sind 86,36mm mal 43,18mm. Ein derartiger Hohlleiter ermöglicht eine Schwingung im Grundmode bei einer Mikrowellenfrequenz von 2,45GHz. Dabei empfiehlt sich ein Entladungsrohr aus Al₂O₃-Keramik mit einem Innendurchmesser von 17mm, wobei der Abstand von der Innenwand 19 des Entladungsrohres 7 zur Wand 18 Hohlleiters über den Steg 20 gemessen etwa 5mm beträgt. Die Impulsbreite der Mikrowelle beträgt dabei 6msec. Bei einer Länge eines derartigen Hohlleiters 1 von etwa 1m lassen sich die Kurven der Figuren 3 bis 6 reproduzieren.

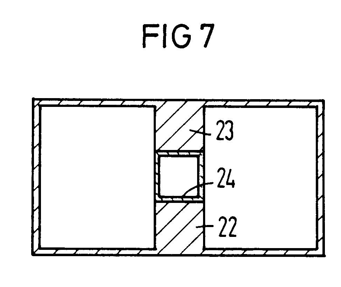

Beim heir verwendeten Prinzip der Laufentladung ist eine Anpassung der Feldverteilung in Ausbreitungsrichtung der Welle nicht erforderlich. Daher ist es möglich, z.B. den in FIG 7 dargestellten Querschnitt eines Hohlleiters zu verwenden. Dieser Hohlleiter ermöglicht eine wesentlich homogenere Feldverteilung und eine bessere Wärmeabfuhr als der in FIG 2 beschriebene. Dabei befindet sich ein rechteckförmiger Entladungskanal 24 aus einem nichtleitenden Material, vorzugsweise Al₂O₃-Keramik zwischen zwei Stegen 22 und 23, die zur gegenüberliegenden Seiten des Hohlleiters führen. Diese Ausführungsform bietet den Vorteil einer wesentlich homogeneren Feldverteilung und einer verbesserten Wärmeabfuhr gegenüber dem Aufbau gemäß FIG 2.

## Patentansprüche

1. Mittels gepulster Mikrowelle angeregter Gaslaser, bei dem in einem Hohlleiter (1) ein sich in Längsrichtung des Hohlleiters erstreckender elektrisch leitender Steg (20) angeordnet ist und bei dem ein mit Brewsterfenstern (8) abgeschlossenes Entladungsrohr (7) durch den Hohlleiter hindurchgeführt ist, **dadurch gekennzeichnet,** daß das Entladungsrohr sich in Längsrichtung des Hohlleiters erstreckt, daß in der Nähe jedes Brewsterfensters sich am Entladungsrohr ein Gasanschluß (10, 14) befindet, daß der Hohlleiter einen im wesentlichen gerade verlaufenden Teil enthält, daß der Hohlleiter auf einer ersten Stirnseite (11) durch ein Kurzschlußglied (6) abgeschlossen ist und auf der zweiten Stirnseite (12) ein Anschlußteil (5) für die Mikrowelle enthält, daß der Abstand zwischen dem Kurzschlußglied und dem Anschlußteil größer als 1/2 von λ_{H} ist, wobei λ_{H} die Wellenlänge der Mikrowelle im Hohlleiter ist, daß in der Nähe der ersten Stirnseite am gerade verlaufenden Teil eine Zündhilfe angeordnet ist und daß der Abstand zwischen der Zündhilfe (21) und dem Kurzschlußglied gewährleistet, daß die Zündhilfe im Bereich hoher elektrischer Feldstärke der am Kurzschlußglied reflektierten Mikrowelle zu liegen kommt und daß die Zündung der Glimmentladung stets im Bereich der Zündhilfe erfolgt.

2. Gaslaser nach Anspruch 1, **dadurch gekennzeichnet,** daß an den gerade verlaufenden Teil des Hohlleiters beidseitig Endstücke angrenzen, daß die Endstücke mit dem geraden Teil winkelig zusammenstoßen und daß der Hohlleiter ein Rechteckprofil aufweist.

3. Gaslaser nach Anspruch 1, **dadurch gekennzeichnet,** daß die Zündhilfe aus einer Schraube oder Spitze besteht, welche in den Hohlleiter hineinragt.

4. Gaslaser nach Anspurch 2, **dadurch gekennzeichnet,** daß das Entladungsrohr außerhalb der Endstücke jeweils mit einem elektrisch leitenden Rohrstück über einen Teil seiner Länge umgeben ist und daß dieses Rohrstück mit dem Hohlleiter hochfrequenzdicht verbunden ist.

5. Gaslaser nach Anspruch 1, **dadurch gekennzeichnet,** daß das Entladungsrohr auf einer der Symmetrieachse des Hohlleiters zugewandten Fläche des Steges befestigt ist.

6. Gaslaser nach Anspruch 1, **dadurch gekennzeichnet,** daß es sich um einen CO₂-Laser handelt.

7. Gaslaser nach Anspurch 1, **dadurch gekennzeichnet,** daß der Hohlleiter als Grundmode-Hohlleiter ausgebildet ist und einen rechteckförmigen Querschnitt besitzt und daß der Abstand zwischen dem Anschlußteil und dem Kurzschlußglied des Hohlleiters größer oder gleich λ_{H} ist.

8. Gaslaser nach Anspurch 1, **dadurch gekennzeichnet,** daß er ein Lasergas mit großer Lebensdauer seines angeregten Zustandes enthält, daß die Impulsbreite und die Impulsamplitude der Mikrowelle so gewählt sind, daß die Laufzeit der Mikrowellen-Gasentladung durch den Hohlleiter kleiner ist als die Lebensdauer des angeregten Zustandes des Lasergases.

9. Gaslaser nach Anspruch 1, **dadurch gekennzeichnet,** daß zumindest annähernd rechteckförmige Mikrowellenimpulse eingesetzt werden, daß deren Impulsbreite kleiner oder gleich de Laufzeit der Gasentladung durch den Hohlleiter gewählt ist und daß die Impulsfolgefrequenz so hoch gewählt ist, daß im Zeitintervall zwischen den Impulsen gerade noch ein Erlöschen der Gasentladung gesichert ist.

## Claims

1. Gas laser excited by pulsed microwaves, in which there is arranged in a waveguide (1) an electrically conductive web (20) extending in the longitudinal direction of the waveguide, and in which a discharge tube (7) sealed by means of Brewster windows (8) is guided through the waveguide, characterised in that the discharge tube extends in the longitudinal direction of the waveguide, in that a gas connection (10, 14) is located in the vicinity of each Brewster window on the discharge tube, in that the waveguide contains a portion extending essentially rectilinearly, in that the waveguide is sealed on a first end face (11) by a short-circuit element (6) and contains a connecting part (5) for the microwaves on the second end face (12), in that the distance between the short-circuit element and the connecting part is greater than 1/2 λ_{H}, λ_{H} being the wavelength of the microwaves in the waveguide, in that an igniting aid (21) is arranged in the vicinity of the first end face on the rectilinearly extending portion, and in that the distance between the igniting aid and the short-circuit element ensures that the igniting aid comes to be situated in the region of high electric field strength of the microwaves reflected at the short-circuit element and that the ignition of the glow discharge always takes place in the region of the igniting aid.

2. Gas laser according to Claim 1, characterised in that end pieces adjoin the rectilinearly extending portion of the waveguide at both ends, in that the end pieces abut the rectilinear portion at an angle, and in that the waveguide has a rectangular profile.

3. Gas laser according to Claim 1, characterised in that the igniting aid comprises a screw or tip which projects into the waveguide.

4. Gas laser according to Claim 2, characterised in that over a part of its length the discharge tube is surrounded outside the end pieces with an electrically conductive tube length in each case, and in that this tube length is connected to the waveguide in a HF-tight fashion.

5. Gas laser according to Claim 1, characterised in that the discharge tube is mounted on a surface of the web which faces the axis of symmetry of the waveguide.

6. Gas laser according to Claim 1, characterised in that it is a CO₂ laser.

7. Gas laser according to Claim 1, characterised in that the waveguide is constructed as a fundamental mode waveguide and has a rectangular cross-section, and in that the distance between the connecting part and the short-circuit element of the waveguide is greater than or equal to λ_{H}.

8. Gas laser according to Claim 1, characterised in that it contains a laser gas having a long lifetime in its excited state, in that the pulse width and the pulse amplitude of the microwaves are selected such that the transit time of the microwave gas discharge through the waveguide is shorter than the lifetime of the excited state of the laser gas.

9. Gas laser according to Claim 1, characterised in that microwave pulses are used which are at least approximately rectangular, in that their pulse width is selected to be shorter than or equal to the transit time of gas discharge through the waveguide, and in that the pulse repetition frequency is selected to be so high that extinction of the gas discharge is still ensured in the time interval between the pulses.

## Revendications

1. Laser à gaz excité au moyen d'une micro-onde pulsée, dans lequel, dans un guide d'ondes (1), est disposée une barrette électriquement conductrice (20) qui s'étend dans la direction longitudinale du guide d'ondes et dans lequel un tube de décharge (7), qui est fermé par des fenêtres de Brewster (8) traverse le guide d'ondes, caractérisé par le fait que le tube de décharge s'étend dans la direction longitudinale du guide d'ondes, qu'un raccord à gaz (10,4) est situé dans le tube de décharge à proximité de chaque fenètre de Brewster, que le guide d'ondes contient une partie qui s'étend selon une disposition sensiblement rectiligne, que le guide d'ondes est fermé sur une première face frontale (11) par un élément de court-circuit (6) et contient, sur la seconde face frontale (12), un élément de raccordement (5) pour la micro-onde, que la distance entre l'élément de court-circuit et l'élément de raccordement est supérieure à 1/2 λ_{H}, λ_{H} étant la longueur d'onde de la micro-onde dans le guide d'ondes, qu'une unité auxiliaire d'amorçage (21) est disposée à proximité de la première face frontale dans la partie rectiligne et que la distance entre l'unité auxiliaire d'amorçage et l'élément de court-circuit garantit que l'unité auxiliaire d'amorçage vient se situer dans le domaine d'une intensité de champ électrique élevée de la micro-onde réfléchie sur l'élément de court-circuit et que l'amorçage de la décharge par effluves s'effectue toujours dans la zone de l'unité auxiliaire d'amorçage.

2. Laser à gaz suivant la revendication 1, caractérisé par le fait que des éléments d'extrémité jouxtent des deux côtés la partie rectiligne du guide d'ondes, que les éléments d'extrémité sont en aboutement, sous un certain angle, avec la partie rectiligne et que le guide d'ondes possède un profil rectangulaire.

3. Laser à gaz suivant la revendication 1, caractérisé par le fait que l'unité auxiliaire d'amorçage est constituée par une vis ou une pointe qui pénètre dans le guide d'ondes.

4. Laser à gaz suivant la revendication 2, caractérisé par le fait que le tube de décharge est entouré, à l'extérieur des éléments d'extrémité, respectivement par un élément tubulaire électriquement conducteur, sur une partie de sa longueur, et que cet élément tubulaire est raccordé au guide d'ondes d'une manière étanche aux hautes fréquences.

5. Laser à gaz suivant la revendication 1, caractérisé par le fait que le tube de décharge est fixé sur une surface de la barrette, qui est tournée vers l'axe de symétrie du guide d'ondes.

6. Laser à gaz suivant la revendication 1, caractérisé par le fait qu'il s'agit d'un laser à CO₂.

7. Laser à gaz suivant la revendication 1, caractérisé par le fait que le guide d'ondes est réalisé sous la forme d'un guide d'ondes fonctionnant dans le mode fondamental et possède une section transversale rectangulaire, et que la distance entre l'élément de raccordement et l'élément de court-circuit du guide d'ondes est supérieure ou égale à λ_{H}.

8. Laser à gaz suivant la revendication 1, caractérisé par le fait qu'il contient un gaz pour l'effet laser, dont l'état excité présente une durée de vie élevée, que la largeur et l'amplitude des impulsions de la micro-onde sont choisies de manière que le temps de propagation de la décharge de la micro-onde dans le gaz a travers le guide d'ondes est inférieur à la durée de vie de l'état excité du gaz laser.

9. Laser à gaz suivant la revendication 1, caractérisé par le fait qu'on utilise des impulsions d'une micro-onde de forme au moins approximativement rectangulaire, que la durée des impulsions est choisie inférieure ou égale au temps de propagation de la décharge dans le gaz à travers le guide d'ondes et que la fréquence de récurrence des impulsions est choisie suffisamment élevée pour qu'une extinction de la décharge dans le gaz soit encore précisément garantie pendant l'intervalle de temps entre les impulsions.
